# EUROPÄISCHE PATENTSCHRIFT

(11) **EP 2 598 304 B1**
(45) Veröffentlichungstag und Bekanntmachung des Hinweises auf die Patenterteilung: **16.01.2019**
(21) Anmeldenummer: 11722441.0
(22) Anmeldetag: 31.05.2011
(51) Int. Cl.: B29C 44/12, B29C 44/44, C08J 9/12, B32B 5/20, B32B 5/22, B32B 5/24, B32B 25/04, B32B 25/08, B32B 25/10, B32B 27/12, B32B 27/18, B32B 27/28, B32B 27/32, B32B 27/34, B29C 44/34, B32B 27/36, B32B 27/06, B32B 27/08, B29L 31/30, B29K 105/00, B29K 27/06, B29K 75/00, B29K 79/00

(54) **VERFAHREN ZUM IN-MOLD FOAMING MIT EINEM SCHÄUMBAREN MEDIUM UND DECKSCHICHTEN UND DADURCH ERHÄLTLICHER KUNSTSTOFFFORMKÖRPER**
IN-MOULD-FOAMING PROCESS USING A FOAMABLE MEDIUM WITH OUTER LAYERS, AND PLASTICS MOULDING OBTAINABLE THEREFROM
PROCÉDÉ DE MOUSSAGE DANS LE MOULE À L'AIDE D'UN AGENT MOUSSANT ET DES COUCHES DE REVÊTEMENT ET PIÈCE MOULÉE EN MATIÈRE PLASTIQUE CORRESPONDANTE

(30) Priorität: 30.07.2010 DE 102010038716
(43) Veröffentlichungstag der Anmeldung: 05.06.2013
(73) Patentinhaber: Evonik Röhm GmbH, 64293 Darmstadt (DE)
(72) Erfinder: KRAATZ, Arnim, 64287 Darmstadt (DE); ZAJONZ, Axel, 64625 Bensheim (DE); ROTH, Matthias, Alexander, Mobile, Al 36693 (US); ZIMMERMANN, Rainer, . (DE)
(86) Internationale Anmeldenummer: PCT/EP2011/058869
(87) Internationale Veröffentlichungsnummer: WO 2012/013393

(56) Entgegenhaltungen:
- EP-A1- 0 272 359
- DE-A1- 2 106 633
- DE-A1- 10 059 436
- GB-A- 2 134 845
- US-A- 4 387 066
- US-A1- 2004 235 973
- US-A1- 2007 033 900

## Beschreibung

### Gebiet der Erfindung

Die Erfindung betrifft ein einstufiges Schäum-, Laminier- und Formverfahren zur Herstellung von Verbundbauteilen. Die Kunststoffschaumverbundformkörper sind mechanisch hoch belastbar und weisen eine geringere Masse als vergleichbare Metallbauteile auf und eignen sich daher hervorragend als Bauelemente in Raum-, Luft-, Wasser- und Landfahrzeugen und für sonstige Konstruktionselemente.

### Stand der Technik

Umformverfahren für Verbundwerkstoffe sind bekannt. So wird beim Schlauchblasverfahren ein Schlauch aus beispielsweise Siliconkautschuk verwendet, um einen Rohling aus einem Verbundwerkstoff, beispielsweise aus glasfaserverstärktem oder kohlefaserverstärktem Kunststoff in einer Form aufzublasen, der Form anzupassen und thermisch auszuhärten. Schlauchblasverfahren: Beim Schlauchblasverfahren (vor allem eingesetzt in der Sportartikelindustrie, z.B. Fahrradrahmen, Tennisschläger usw.) werden mittels eines Silikonschlauchs in einer Form Deckschichten aus faserverstärkten Kunststoffen (FVK) bei erhöhtem Innendruck und erhöhter Temperatur verpresst und ausgehärtet. Hierzu werden in eine Form, FVK mit meist duroplastischer Matrix, sog. Prepregs eingelegt. Um die Außenkontur der Form abzubilden, wird nach dem Schließen des Werkzeugs ein Silikonschlauch im Inneren der Form mit Druck beaufschlagt. Unter einer definierten Temperatur wird dann der FVK ausgehärtet. Anschließend wird die Form geöffnet, das Bauteil aus der Form entnommen und der Silikonschlauch entfernt. In Fällen, in denen der Schlauch bauteilbedingt nicht wieder entfernt werden kann, werden "verlorene Kerne" eingesetzt.

In der DE 198 45 269 (MBK) wird beschrieben, wie ein von einem Luftpolster umgebener Schlauch in einen kompliziert geformten Formhohlraum geführt und anschließend aufgeblasen wird und so den Formhohlraum vollständig ausfüllt.

DE 10 2007 056 830 (Head) beschreibt ein Schlauchblasverfahren zur Herstellung von Tennisschlägern aus Verbundwerkstoffen.

Die Erfindung der DE 10 2007 051 517 (TU Dresden) betrifft eine Hohlwelle bzw. hohle Achse aus Faserverbundwerkstoff zur formschlüssigen Verbindung mit Funktionselementen. Die Hohlwelle hat mindestens zwei Faserschichten im Mantel, unterschiedliche Faserorientierungen in den Schichten und ein Profil mit verrundeten Kanten. Die Funktionselemente weisen eine mit dem Wellenprofil korrespondierende Profil-Kontaktfläche, eine Funktionsflächenanordnung und einen dazwischen liegenden Übergangskörper auf. Sowohl die erfindungsgemäße Welle als auch die Funktionselemente weisen ein geringes Gewicht auf.

DE 10 2004 015 072 (Röhm GmbH & Co. KG) beschreibt ein Verfahren zur Herstellung von Stäben aus transparenten Kunststoffen durch die Extrusion einer Kunststoffformmasse, dadurch gekennzeichnet, dass man eine extrudierte Kunststoffformmasse in zwei unterschiedliche Stränge auftrennt und aus der Kunststoffformmasse 1 ein Kunststoffrohr extrudiert und nach Eintritt in einen Vakuumtankkalibrator nach ca. 20 cm das frisch extrudierte Rohr parallel mit der zuvor abgetrennten geschmolzenen Kunststoffformmasse 2 füllt und den neu gebildeten Kunststoffformkörper wie bei der üblichen Rohrextrusion weiter verarbeitet.

DE 102 40 395 (Lisa Dräxlmaier GmbH) beschreibt einen Querträger für ein Kraftfahrzeug, der bisher aus einem Stahlrohr im Innenhochdruckverfahren hergestellt wurde, an den Querträger können verschiedene Aufnahmen für weitere Teile angeschweißt sein. Der erfindungsgemäße Querträger umfaßt einen Rohbogen aus einem Faserverbundwerkstoff oder in Metall-Kunststoff-Hybridbauweise, an den die verschiedene Aufnahmen für weitere Teile angespritzt sind.

DE 10 2009 002 232 (Volkswagen AG) beschreibt ein Verfahren und eine Vorrichtung zur Herstellung einer Nockenwelle, welches flexibler als die bisherigen Verfahren, wie beispielsweise Innenhochdruck-Umformverfahren (IHU) oder Gußverfahren sind und die leichtere Produkte ergeben. Die Nockenwelle besteht aus faserverstärkten Kunststoff, das Herstellungsverfahren besteht aus folgenden Schritten:
- die vorgefertigten Lasteinleitungselemente werden auf dem eine Hohlstruktur aufweisenden Faser-Halbzeug angeordnet,
- in das Faser-Halbzeug wird ein elastischer Hohlkörper eingebracht und
- die gesamte Anordnung wird in ein temperierbares Formwerkzeug gelegt,
- im Formwerkzeug werden die Lasteinleitungselemente positioniert,
- der elastische Hohlkörper wird befüllt, dadurch drückt sich das Halbzeug an die Kontur des Formwerkzeuges und der Lasteinleitungselemente,
- ein Matrixwerkstoff wird eingefüllt und thermisch gehärtet,
- nach der Härtung kann die Welle entformt werden.

DE 10 2007 026 553 (TU Dresden) beschreibt eine mehrzellige Verbundstruktur mit einem Wagenradprofil für Achsen und Wellen, beispielweise für Flugzeugfahrwerke.

Die hohe mechanische Belastungsfähigkeit des Bauteils wird durch Anordnung der Faserschichten in verschiedenen Winkeln erreicht.

DE 10 2005 020 274 (Denk Engineering GmbH) beschreibt ein Verfahren zur Herstellung eines faserverstärkten Kunststoffformteils, bei dem das Faserlaminat auf ein dehnbares Innenformteil aufgebracht wird, das mit dem Faserlaminat belegte Innenformteil in eine Negativform eingebracht und ausgedehnt wird, wobei das Innenformteil sich ausdehnt und das Fasermaterial an die Innenwand der Bauteilform gepreßt wird. In die Bauteilform können Metallteile oder bereits ausgehärtete faserverstärkte Teile in die Bauteilform eingebracht werden, die nach dem Aushärten des faserverstärkten Materials fest mir dem Kunststoffformteil verbunden sind und es zusätzlich verstärken. Die Ausdehnung der Kernummantelung erfolgt durch Gas- oder Flüssigkeitszufuhr, kann aber auch durch Unterdruck erfolgen.

DE 10 2005 020 907 A1 (TU Dresden) beschreibt eine Hohlstruktur aus Faserverstärktem Kunststoff mit Lasteinleitungselementen, die an die Innenkontur der Hohlstruktur angeformt sind. Die Hohlstruktur besteht aus mit einem Reaktionsharzgemisch getränktem textilen Halbzeug. Der Auftrag des Reaktionsharzes kann von Hand oder mittels eines bekannten Injektionsverfahrens, wie beispielsweise Resign-Transfer-Moulding (RTM) erfolgen. Die konturgenaue Abformung erfolgt mit Hilfe eines Blasschlauchs.

Das "In-Form-Schäumen" mit PUR zeichnet sich im Wesentlichen aus durch:
- Beim "normalen" PUR-Schäumen wird in das Bauteil geschäumt (ähnlich dem Bauschaum)
- Es werden mittels PUR "verlorene Kerne" hergestellt, die dann mit Deckschichten belegt werden können. Dieser Prozeß umfaßt dann mehrere Schritte.
- Beim PUR wird aus der flüssigen Phase geschäumt.

Um die Energie beim Crash-Fall eines Fahrzeugs abzubauen, werden in der Automobilstruktur Crashelemente eingesetzt. Diese werden in der Regel aus Metallen umgeformt und bauen die Energie im Lastfall über eine definierte Verformung (Zusammenfaltung) der metallischen Struktur ab.

Für einzelne Spezialanwendungen (Rennfahrzeuge oder sportliche Kleinstserien) werden bereits Crashelemente mit einem Schaumstoffkern und FVK Deckschichten eingesetzt. Der Herstellungsprozess unterscheidet sich jedoch grundlegend von dem erfindungsgemäßen Vorgehen: Auf einen in Form gebrachten Schaumstoffkern werden in einem zweiten Prozessschritt Fasern aufgebracht, die dann in einem dritten Prozessschritt konsolidiert werden.
Um z.B. bei Fahrzeugkarosserien eine versteifende Wirkung (auch an crashbeanspruchten Stellen) zu erzielen, werden PUR-Schaumstoffe eingesetzt. Diese werden direkt in metallische Hohlprofile eingespritzt und expandieren während des Einbringens (z.B. in die B-Säule eines Automobils). Das Verfahren basiert in diesem Fall darauf, dass es möglich ist, den PUR in situ zu verschäumen.

GB 2 134 845 A offenbart ein Verfahren zur Verbindung von PMI Schäumen mit Duroplast Deckschichten.

### Aufgabe

Erfindungsgemäße Aufgaben sind daher:
- Entwicklung eines Verfahrens zur in-situ-Schäumung,
- Entwicklung eines einfachen, einstufigen Verfahrens zur Herstellung von dreidimensionalen, schaumgefüllten Bauteilen (Kunststoffschaumverbundformkörper),
- Entwicklung eines einfachen, einstufigen Verfahrens zur Herstellung von dreidimensionalen, schaumgefüllten Bauteilen (Kunststoffschaumverbundformkörper), die mit einer und/oder mehreren Deckschichten umhüllt sind, wobei die Deckschichten untereinander verbunden sein können,
- Herstellung von Leichtbau-Crash-Elementen aus Kunststoffschaumverbundformkörpern,
- Herstellung von Formteilen und Profilstrukturen mit Schaumkern und einer Deckschicht oder mehreren Deckschichten,
- Herstellung von flächigen Kunststoffschaumverbundformkörpern,
- Herstellung von Integralbauteilen mit krafteinleitenden (Inserts) oder verbindenden oder versteifenden Strukturen,
- In-situ Herstellung von Schaumfolien,
- Sensoren,
- Herstellung von Bauteilen mit variabler/einstellbarer Dichte,
- Antenne (Abstandhalter),
- Herstellung von Elementen zu Erhöhung von Druck- und Beul- und Knickstabilität,
- Erstellung einer weitestgehend homogenen Schaumstruktur,
- Herstellung von Bauteilen mit anisotropen mechanischen Eigenschaften,
- Versteifung von Längs- und Querträgern (z.B. A, B und C-Säule im Automobil) durch einen Kunststoffschaumverbundformkörper,

### Lösung

Die erfindungsgemäßen Aufgaben werden durch einen Poly(meth)acrylimidcopolymer Kunststoffschaumverbundformkörper und durch ein Verfahren zu seiner Herstellung wie folgt gelöst:
Durch Verwendung eines festen, aufschäumbaren Poly(meth)acrylimid (PMI) Kunststoffes gelingt es, einen im wesentlichen homogenen Kunststoffschaumverbundformkörper herzustellen, der sich im Zuge des Aufschäumprozesses mit einer Deckschicht oder mit mehreren gleichen oder unterschiedlichen Deckschichten mechanisch stabil verbindet.

Unter "mechanisch stabil" wird im folgenden verstanden, daß die Kraft, die zur Ablösung der Deckschicht erforderlich ist (Meßmethode: Trommel-Schälversuch nach DIN 53295), größer ist als materialtypische Schälmomente. Diese liegen für ROHACELL® im Bereich von 10 bis 80 Nmm/mm.

### Die Deckschichten

Die Deckschichten des Kunststoffschaumverbundformkörpers bestehen aus:
- thermoplastischen Materialien mit und ohne Verstärkungsstoffen, wie beispielsweise unterschiedliche Polyamid-Typen (PA, PA 66, PA 12), Polypropylen (PP), Polybutylenterephthalat (PBT), Polyetheretherketon (PEEK) mit optionaler Verstärkung durch beispielsweise Glasfasern, Aramidfasern, Polymerfasern, Naturfasern oder Kohlefasern, wie beispielsweise PA 6 GF
- thermoplastischen Faserverbundwerkstoffen oder Organoblechen, wie beispielsweise endlosfaserverstärktes PA 6.

Weitere, nicht erfindungsgemäße Deckschichten bestehen aus:
- duroplastischen Materialien mit und ohne Verstärkungsstoffen, wie beispielsweise Prepregs
- nur Verstärkungsstoffen, wie Fasern aus Glas, Kohlenstoff, Aramid, Polymer, wie beispielsweise Basaltfasern, Borfasern, Keramikfasern, Metallfasern, Polyester-Fasern, Nylon-Fasern, Polyethylen-Fasern, Plexiglas-Fasern, Naturfasern wie beispielsweise Holzfasern, Flachs-Fasern, Hanf-Fasern, Sisalfasern
- Metallen, wie beispielsweise Aluminium, Stahl, hochfester Stahl
- Elastomeren, wie beispielsweise Gummi, PUR, faserverstärkter Gummi oder faserverstärkter PUR
- Gel-Coats
- und Kombinationen aus einem oder mehreren der vorstehend genannten Materialien. wie beispielsweise mehrschichtige Aufbauten (Laminate) aus Kombinationen von Glasfasergelege und Kohlefasergelege

Als Verstärkungsstoffe für die Deckschichten des Kunststoffschaumverbundformkörpers kommen die in der Kunststofftechnik üblichen Fasermaterialien in Betracht, wie beispielsweise:
- Glasfasern, beispielsweise in Form von Kurzglasfasern, Langglasfasern, Endlosfasern, Fasergelegen, Fasergeweben, Gewirken, Fliesen oder Matten
- Kohlefasern, beispielsweise in Form von Kurzglasfasern, Langglasfasern, Endlosfasern, Fasergelegen, Fasergeweben, Gewirken, Fliesen oder Matten
-
- Aramidfasern, beispielsweise in Form von Kurzglasfasern, Langglasfasern, Endlosfasern, Fasergelegen, Fasergeweben, Gewirken, Fliesen oder Matten
-
- Naturfasern, wie beispielsweise Holzfasern, Flachs-Fasern, Hanf-Faser, Sisalfasern
-
- Kunststofffasern und, wie beispielsweise Polyester-Fasern, Nylon-Fasern, Polyethylen-Fasern, Plexiglas-Fasern
-
- Glaskugeln, wie beispielsweise Glaskugelverstärktes Polyamid (z.B. PA 6 GK30)
-

Die Deckschichten können auch untereinander verklebt sein.

### Das Poly(meth)acrylimid und der Poly(meth)acrylimidschaum

Die für das Verfahren der Erfindung relevanten Kernschichten weisen einen Poly(meth)acrylimidschaum auf.

Die in Klammern gesetzte Schreibweise soll ein optionales Merkmal kennzeichnen. So bedeutet beispielsweise (Meth)acryl sowohl Acryl als auch Methacryl und Mischungen aus beiden Verbindungen.

Die aus den erfindungsgemäßen Zusammensetzungen erhältlichen Poly(meth)acrylimid-Schaumstoffe weisen wiederkehrende Einheiten auf, die durch Formel (I) darstellbar sind, 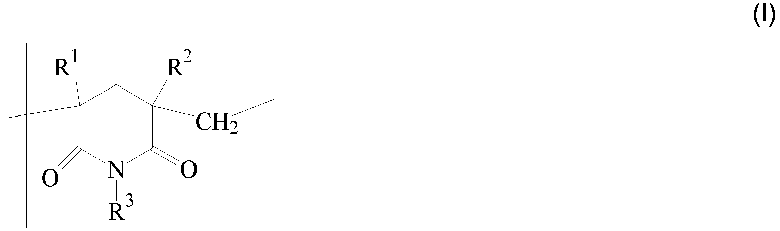 worin
R¹ und R² gleich oder verschieden Wasserstoff oder eine Methylgruppe und R³ Wasserstoff oder ein Alkyl- oder Arylrest mit bis zu 20 Kohlenstoffatomen bedeuten.

Vorzugsweise bilden Einheiten der Struktur (I) mehr als 30 Gew.-%, besonders bevorzugt mehr als 50 Gew.-% und ganz besonders bevorzugt mehr als 80 Gew.-% des Poly(meth)acrylimid-Schaumstoffs.

Die Herstellung von Poly(meth)acrylimid-Hartschaumstoffen ist an sich bekannt und beispielsweise in GB-PS 1 078 425, GB-PS 1 045 229, DE-PS 1 817 156 (= US-PS 3 627 711) oder DE-PS 27 26 259 (= US-PS 4 139 685) oder der DE 199 17 987 offenbart.

So können sich die Einheiten der Strukturformel (I) unter anderem beim Erhitzen auf 150 °C bis 250 °C aus benachbarten Einheiten der (Meth)acrylsäure und des (Meth)acrylnitrils durch eine cyclisierende Isomerisierungsreaktion bilden (vgl. DE-C 18 17 156, DE-C 27 26 259, EP-B 146 892). Üblicherweise wird zunächst ein Vorprodukt durch Polymerisation der Monomeren in Gegenwart eines Radikalinitiators bei niedrigen Temperaturen, z. B. 30 °C bis 60 °C mit Nacherhitzung auf 60 °C bis 120 °C erzeugt, das dann durch Erhitzen auf ca. 180 °C bis 250 °C durch ein enthaltenes Treibmittel aufgeschäumt wird (siehe EP-B 356 714).
Hierzu kann beispielsweise zunächst ein Copolymerisat gebildet werden, welches (Meth)acrylsäure und (Meth)acrylnitril vorzugsweise in einem Molverhältnis zwischen 1 : 3 und 3 : 1 aufweist.
Darüber hinaus können diese Copolymerisate weitere Monomereinheiten enthalten, die sich beispielsweise aus Estern der Acryl- oder Methacrylsäure, insbesondere mit niedrigen Alkoholen mit 1 - 4 C-Atomen, Styrol, Maleinsäure oder deren Anhydrid, Itakonsäure oder deren Anhydrid, Vinylpyrrolidon, Vinylchlorid oder Vinylidenchlorid ergeben. Der Anteil der Comonomeren, die sich nicht oder nur sehr schwer cyclisieren lassen, soll 30 Gew.-%, vorzugsweise 20 Gew.-% und besonders bevorzugt 10 Gew.-%, bezogen auf das Gewicht der Monomeren, nicht übersteigen.

Als weitere Monomere können in ebenfalls bekannter Weise geringe Mengen an Vernetzern, wie z. B. Allylacrylat, Allylmethacrylat, Ethylenglycoldiacrylat oder - dimethacrylat oder mehrwertige Metallsalze der Acryl- oder Methacrylsäure, wie Magnesium-Methacrylat vorteilhaft verwendet werden. Die Mengenanteile dieser Vernetzer liegen häufig im Bereich von 0,005 Gew.-% bis 5 Gew.-%, bezogen auf die Gesamtmenge an polymerisierbaren Monomeren.

Des Weiteren können Metallsalzzusätze verwendet werden, die vielfach rauchgasmindernd wirken. Hierzu gehören unter anderem die Acrylate oder Methacrylate der Alkali- oder Erdalkalimetalle oder des Zinks, Zirkons oder Bleis. Bevorzugt sind Na-, K-, Zn-, und Ca-(Meth)acrylat. Mengen von 2 bis 5 Gewichtsteile der Monomeren bewirken eine deutliche Minderung der Rauchgasdichte bei der Brandprüfung gemäß FAR 25.853a.

### Die Polymerisationsinitiatoren

Als Polymerisationsinitiatoren werden die an sich für die Polymerisation von (Meth)acrylaten üblichen verwandt, beispielsweise Azoverbindungen, wie Azodiisobutyronitril, sowie Peroxide, wie Dibenzoylperoxid oder Dilauroylperoxid, oder auch andere Peroxidverbindungen, wie beispielsweise t-Butylperoctanoat oder Perketale, wie auch gegebenenfalls Redoxinitiatoren (vgl. hierzu beispielsweise H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Bevorzugt werden die Polymerisationsinitiatoren in Mengen von 0,01 bis 0,3 Gew.-%, bezogen auf die Ausgangsstoffe, eingesetzt.

Günstig kann es auch sein, Polymerisationsinitiatoren mit unterschiedlichen Zerfallseigenschaften bezüglich Zeit und Temperatur zu kombinieren. Gut geeignet ist z.B. die gleichzeitige Verwendung von tert.-Butylperpivalat, tert.-Butylperbenzoat und tert.-Butylper-2-ethylhexanoat oder von tert.-Butylperbenzoat, 2,2-Azobisiso-2,4-dimethylvaleronitril, 2,2-Azobisisobutyronitril und Di-tert.-Butylperoxid.

### Die Regler

Die Einstellung der Molekulargewichte der Copolymerisate erfolgt durch Polymerisation des Monomerengemisches in Gegenwart von Molekulargewichtsreglern, wie insbesondere von den dafür bekannten Mercaptanen, wie beispielsweise n-Butylmercaptan, n-Dodecylmercaptan, 2-Mercaptoethanol oder 2-Ethylhexylthioglycolat oder auch Chinonen oder Terpenen, wobei die Molekulargewichtsregler im allgemeinen in Mengen von 0,01 Gew.-% bis 5 Gew.-% bezogen auf das Monomerengemisch, bevorzugt in Mengen von 0,1 Gew.-% bis 2 Gew.-% und besonders bevorzugt in Mengen von 0,2 Gew.-% bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1, Seite 66, Georg Thieme, Heidelberg, 1961 oder Kirk-Othmer, Encyclopedia of Chemical Technology, Vol. 1, Seiten 296ff, J. Wiley, New York, 1978).

Die Polymerisation erfolgt vorzugsweise über Varianten der Substanzpolymerisation, wie beispielsweise das so genannte Kammerverfahren, ohne hierauf beschränkt zu sein.

Das Gewichtsmittel des Molekulargewichts *M̅_{w}* der Polymere ist vorzugsweise größer als 10⁶ g/mol, insbesondere größer als 3×10⁶ g/mol, ohne daß hierdurch eine Einschränkung erfolgen soll.

Zum Aufschäumen des Copolymerisats während der Umwandlung in ein imidgruppenhaltiges Polymer dienen in bekannter Weise Treibmittel, die bei 150 °C bis 250 °C durch Zersetzung oder Verdampfung eine Gasphase bilden. Treibmittel mit Amidstruktur, wie Harnstoff, Monomethyl- oder N,N'-Dimethylharnstoff, Formamid oder Monomethylformamid, setzen beim Zerfall Ammoniak oder Amine frei, die zur zusätzlichen Bildung von Imidgruppen beitragen können. Es können jedoch auch stickstofffreie Treibmittel wie Ameisensäure, Wasser oder einwertige aliphatische Alkohole mit 3 bis 8 C-Atomen, wie 1-Propanol, 2-Propanol, n-Butan-1-ol, n-Butan-2-ol, Isobutan-1-ol, Isobutan-2-ol, Pentanole und/oder Hexanole, verwendet werden.

Die eingesetzte Treibmittelmenge richtet sich nach der gewünschten Schaumstoffdichte, wobei die Treibmittel im Reaktionsansatz üblicherweise in Mengen von ca. 0,5 Gew.-% bis 15 Gew.-%, bezogen auf die eingesetzten Monomeren, verwendet werden.

Des Weiteren können die Vorprodukte übliche Zusatzstoffe enthalten. Hierzu gehören unter anderem Antistatika, Antioxidantien, Entformungsmittel, Schmiermittel, Farbstoffe, Flammschutzmittel, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Leitfähige Partikel, die eine elektrostatische Aufladung der Schaumstoffe verhindern, sind eine weitere Klasse von bevorzugten Zusatzstoffen. Hierzu gehören unter anderem Metall- und Rußpartikel, die auch als Fasern vorliegen können, mit einer Größe im Bereich von 10 nm und 10 mm, wie dies in EP 0 356 714 A1 beschrieben ist.

Ein ganz besonders bevorzugter einsetzbarer Poly(meth)acrylimid-Schaumstoff kann beispielsweise durch folgende Schritte erhalten werden:
1. Herstellen einer Copolymerisatplatte durch radikalische Copolymerisation einer Zusammensetzung, bestehend aus
   (a) einer Monomermischung aus 20 Gew.-% - 60 Gew.-% Methacrylnitril, 80 Gew.-% - 40 Gew.-% Methacrylsäure und gegebenenfalls bis 20 Gew.-%, bezogen auf die Summe von Methacrylsäure und Methacrylnitril, weiteren monofunktionellen, vinylisch ungesättigten Monomeren
   (b) 0,5 Gew.-% bis 15 Gew.-% eines Treibmittelgemisches aus Formamid oder Monomethylformamid und einem einwertigen aliphatischen Alkohol mit 3 - 8 Kohlenstoffatomen im Molekül
   (c) einem Vernetzersystem, welches besteht aus
      (c.1) 0,005 Gew.-% bis 5 Gew.-% einer radikalisch polymerisierbaren vinylisch ungesättigten Verbindung mit mindestens 2 Doppelbindungen im Molekül und
      (c.2) 1 Gew.-% bis 5 Gew.-% Magnesiumoxid oder Zinkoxid, gelöst in der Monomermischung
   (d) einem Initiatorsystem
   (e) üblichen Zusatzstoffen
   (f) einem Regler oder Reglergemisch
2. Diese Mischung wird mehrere Tage bei 30 °C bis 45°C in einer aus zwei Glasplatten der Größe 50*50 cm und einer 2,2 cm dicken Randabdichtung gebildeten Kammer polymerisiert. Anschließend wird das Copolymerisat zur Poly(meth)acrylimid-Endcopolymerisation etwa 20h einem von 40°C bis 130°C reichenden Temperprogramm unterworfen.
Die darauffolgende Schäumung erfolgt während einiger Stunden bei 170 °C bis 250°C, bevorzugt bei 200 °C bis 250 °C und ganz besonders bevorzugt bei 220 °C bis 250 °C.

Poly(meth)acrylimide mit hoher Wärmeformbeständigkeit können des Weiteren durch Umsetzung von Polymethyl(meth)acrylat oder dessen Copolymeren mit primären Aminen erhalten werden, die ebenfalls erfindungsgemäß einsetzbar sind. Stellvertretend für die Vielzahl an Beispielen für diese polymeranaloge Imidierung seien genannt: US 4 246 374, EP 216 505 A2, EP 860 821. Hohe Wärmeformbeständigkeit läßt sich hierbei entweder durch Einsatz von Arylaminen (JP 05222119 A2) oder durch die Verwendung von speziellen Comonomeren erreichen (EP 561 230 A2, EP 577 002 A1). All diese Reaktionen ergeben jedoch keine Schäume, sondern feste Polymere, die zum Erhalt eines Schaumes in einem separaten zweiten Schritt aufgeschäumt werden müssen. Auch hierfür sind in der Fachwelt Techniken bekannt.

Copoly(meth)acrylimid-Hartschaumstoffe können auch kommerziell erhalten werden, wie beispielsweise Rohacell® von Evonik Röhm GmbH, das in verschiedenen Dichten und Größen lieferbar ist.

Die Dichte des Copoly(meth)acrylimidschaums liegt bevorzugt im Bereich von 20 kg/m³ bis 320 kg/m³, besonders bevorzugt im Bereich von 50 kg/m³ bis 110 kg/m³. Ohne daß hierdurch eine Beschränkung erfolgen soll, liegt die Dicke der Kernschicht im Bereich von 1 mm bis 1.000 mm, insbesondere im Bereich von 5 mm bis 500 und ganz besonders bevorzugt im Bereich von 10 mm bis 200 mm.

Die Kernschicht kann im Innern zusätzlich weitere Schichten aufweisen. Erfindungsgemäß wird eine Kernschicht eingesetzt, die aus Copoly(meth)acrylimidschaum besteht.

Nicht erfindngsgemäß können auch Poly(meth)acrylate als zu schäumende Kunststoffe eingesetzt werden.

### Der Herstellungsprozeß

Der Herstellungsprozeß des Kunststoffschaumverbundkörpers besteht aus folgenden Schritten:
1. Herstellung des Kunststoffformkörpers. Der Kunststoffformkörper ist ungeschäumt und wird mechanisch auf die erforderlichen Abmessungen gebracht. Die Abmessungen richten sich nach der einzustellenden Schaumdichte im fertigen Kunststoffschaumverbundkörper. Bei der bekannten Dichte des Copolymerisats ergibt sich aufgrund des isotropen Schäumverhaltens, zieldichtebezogen ein konstanter Schäumfaktor. Daraus lassen sich die Dimensionen des benötigten Copolymerisats berechnen.
2. Die Deckschicht wird in die Form eingelegt, gegebenenfalls kann zwischen Form und Deckschicht ein Trennmittel aufgebracht werden, um das Entformen des Kunststoffschaumverbundkörpers zu erleichtern.
3. Die Schäumung und Verbindung des entstehenden Schaums mit der Deckschicht oder den Deckschichten erfolgt in einem Schritt bei Temperaturen zwischen 170 Grad Celsius und 250 Grad Celsius, bevorzugt bei 200 °C bis 250 °C und ganz besonders bevorzugt bei 220 °C bis 250 °C.
   Die Schäumdauer liegt zwischen ½ Stunde und 5 Stunden, bevorzugt zwischen 1½ Stunden und 4 Stunden und ganz besonders bevorzugt zwischen 2 Stunden und 3 Stunden.
4. Nach dem Abkühlen kann der Kunststoffschaumverbundkörper aus der Form entnommen werden.

Das Material, aus dem die Form hergestellt wird, unterliegt lediglich insoweit einer Beschränkung, als es in der Lage sein muß, den Temperaturen des Schäumprozesses zu widerstehen. Es ist ferner vorteilhaft, wenn die Innenseite der Form glatt ist, um die Entformung des Kunststoffschaumverbundformkörpers zu erleichtern und eine glatte Oberfläche des Kunststoffschaumverbundformkörpers zu erzielen.

Die nach den erfindungsgemäße Verfahren erhältlichen Kunststoffschaumverbundformkörper eignen sich auf Grund ihres geringen Gewichts und ihrer hervorragenden mechanischen Eigenschaften als Bauteil in Raum- ,Luft- , See- und Landfahrzeugen, insbesondere als Bauteile, die sich im Falle eines Unfalls energiezehrend verformen. (Crash-Elemente)

### Beispiele

### Beispiel 1

Die Herstellung des Kunststoffformkörpers erfolgt nach der Vorschrift gemäß Beispiel 1 der DE 199 17 987 A1.

Ein Gemisch aus ca. 61 Teilen Methacrylsäure, ca. 39 Teilen Methacrylnitril, ca. 4,7 Teilen Formamid und 4,2 Teilen Propanol-2 (Isopropanol) und einem Initiatorgemisch aus 0,3 Teilen tert.-Butylpivalat, 0,04 Teilen tert.-Butyl-2-ethylhexanoat, 0,07 Teilen tert.-Butylperbenzoat und 0,077 Teilen Cumylperneodecanoat und 0,001 Teile Regler wird zwischen zwei Glasplatten, die einen Abstand von 23 mm aufweisen und die durch eine umlaufende Abdichtungsschnur abgedichtet sind, ca. 66 Stunden bei einer Wasserbadtemperatur von 38 Grad Celsius polymerisiert, anschließend wird 24 Stunden in einem Wärmeschrank bei einer Temperatur von 115 Grad Celsius nachpolymerisiert. Es wird ein gleichmäßiger Kunststoffformkörper erhalten. ("Teile" bedeuten im obigen Beispiel immer Gewichtsteile.)

### Beispiel 2

In eine zylindrisch Form mit dem Durchmesser von 53,5 mm und der Länge von 265 mm wird auf die Innenseite eine Folie aus Polyamid (Organoblech: Hersteller Bond Laminates GmbH, Brilon, Typ: TEPEX ® dynalite 102-RG600(1)/47%, 0,50 mm black (PA6 + GF)) so gelegt, daß sie am Innenrand der Form anliegt. In die Form wird ein Poly(meth)acrylimid-Polymer mit der Zusammensetzung gemäß Beispiel 1 und der Abmessung 98 x 17,5 x 17,5 mm gelegt und die Form während ca. 2 Stunden auf 220 Grad Celsius erhitzt.

Nach dem Abkühlen erhält man einen Kunststoffschaumverbundformkörper mit folgenden mechanischen Eigenschaften:
- Die Dichte des Bauteils kann in einem Bereich von 10 kg/m³ - 300 kg/m³, vorzugsweise aber im Bereich von 50 kg/m³ - 200 kg/m³ eingestellt werden.
- Im gesamten Bauteilkern liegt eine relativ (der Begriff bedarf der näheren Erläuterung) homogene, d.h. geschlossenzellige Schaumstruktur ohne signifikante Vorzugsrichtung vor.
- Das Bauteil zeichnet sich im Kern durch eine gleichmäßige Zellgrößenverteilung (abhängig von der einzustellenden Zieldichte liegen die Zellgrößen im Bereich von 0,05 - 0,8 mm, vorzugsweise im Bereich von 0,2 bis 0,6 mm) aus.
- Der Schaumkern weißt eine nahezu 100% geschlossenzellige Struktur auf.
- Es liegt eine sehr gute Anbindung/Anhaftung zu den Deckschichten vor. Unter "sehr guter Anbindung/Anhaftung" wird im folgenden verstanden, daß die Kraft, die zur Ablösung der Deckschicht erforderlich ist (Meßmethode, Norm: Trommel-Schälversuch nach DIN 53295), größer ist als materialtypische Schälmomente. Diese liegen für ROHACELL im Bereich von 10 bis 80 Nmm/mm.
- Über das Verfahren wird eine sehr gute Formgebung realisiert. Dreidimensionale Geometrien mit sehr geringen Radien können abgeformt werden.
- Es liegt eine sehr gute Abformung der dreidimensionalen Geometrie vor. Das bedeutet, dass hohe Umformgrade des Schaumkerns und der Deckschichten durch den Prozess erreicht werden.
- Der Verbundformkörper weißt eine glatte Außenhaut auf.
- Beim Kunstoffverbundformkörper liegt eine sehr gute Faserkonsolidierung vor. Zur Initiierung des Schäumprozesses werden hohe Temperaturen (Bereich siehe oben) in das Bauteil eingebracht. Dies führt zum Beispiel bei thermoplastischen Matrixsystemen der Deckschichten (beispielsweise Organoblech) zu einer Aufschmelzen der Materialien. Des Weiteren werden über den Schäumprozess hohe Drücke auf die Deckschichten aufgebracht. Dies führt zu einer guten Konsolidierung der enthaltenen Fasern.
- Durch den Verbund wird eine hohe Energieaufnahme ermöglicht. Die hohe Energieaufnahme resultiert sowohl aus den faserverstärkten Deckschichten als auch aus dem Schaumkern: Im Falle einer starken Energieeinwirkung (beispielsweise Crash) werden sich nach dem Erreichen der Festigkeit in der Deckschicht Risse bilden. Diese "wandern" von Faser zu Faser und "verbrauchen" dabei Energie. Beim Schaum liegt folgender Fall vor: Bei Überschreitung der Festigkeit kommt es zum sog. Kollaps der ersten Zellen. Anschließend kollabiert eine komplette Zellebene, dann die nächste, dann die nächste, usw. Hierbei wird durch das wiederholte "Auftreffen auf ein Hindernis (unzerstörte Zellebene)" Energie abgebaut.
- Der Kunstoffverbundformkörper hat hohe Biege- und Torsionssteifigkeiten, hohe Knicklasten und ein sehr gutes Beulverhalten. Den guten mechanischen Eigenschaften liegt im Wesentlichen das Prinzip der Sandwichsbauweise zu Grunde. Die Sandwichbauweise ist eine Bauweise für Halbzeuge bei der mehrere Schichten verschiedener Eigenschaften in einem Werkstoff eingebettet werden. Sie wird sehr häufig in Kombination mit Faserverbundwerkstoffen wie Faser-Kunststoff-Verbunden angewendet. Als Konstruktionsweise bezeichnet die Sandwichbauweise eine Form des Leichtbaus, bei dem die Bauteile aus kraftaufnehmenden Decklagen bestehen, die durch einen relativ leichten Kernwerkstoff auf Abstand gehalten werden. Diese Teile sind bei geringem Gewicht sehr biege- und beulsteif. Ihre Berechnung wird nach der linearen Sandwichtheorie vorgenommen. Das Kernmaterial kann aus Papierwaben, Schaumstoffen (Hartschaum) oder Balsaholz bestehen. Da beispielsweise im Lastfall "Biegung" v.a. die äußeren Lagen die Zug- und Druckkräfte aufnehmen, kann der Plattenkern aus leichterem Material eingesetzt werden und ist lediglich zur Übertragung der Schubkräfte verantwortlich.

### Beispiel 3

In eine zylindrisch Form mit dem Durchmesser von 53,5 mm und der Länge von 265 mm wird auf die Innenseite eine Folie aus Polyamid (Organoblech: Bond Laminates TEPEX ® dynalite 102-RG600(1)/47%, 0,50 mm black (PA6 + GF)) so gelegt, daß sie am Innenrand der Form glatt anliegt. In die Form wird ein Poly(meth)acrylimid-Polymer mit der Zusammensetzung gemäß Beispiel 1 gelegt. Zusätzlich wird ein Stahlstab mit den Abmessungen 12 x 12 mm (quadratisch) und 245 mm Länge in die Form so gelegt, daß die Folie aus Polyamid den Stahlstab nicht umhüllt und die Form während ca. 2 Stunden auf ca. 220 Grad Celsius erhitzt.

Nach dem Abkühlen erhält man einen Kunststoffschaumverbundformkörper mit einer 12 x 12 mm tiefen Nut mit folgenden mechanischen Eigenschaften:
- Die Dichte des Bauteils kann in einem Bereich von 10 kg/m³ - 300 kg/m³, vorzugsweise aber im Bereich von 50 kg/m³ - 200 kg/m³ eingestellt werden.
- Im gesamten Bauteilkern liegt eine relativ homogene, d.h. geschlossenzellige Schaumstruktur ohne signifikante Vorzugsrichtung vor.
- Das Bauteil zeichnet sich im Kern durch eine gleichmäßige Zellgrößenverteilung (abhängig von der einzustellenden Zieldichte liegen die Zellgrößen im Bereich von 0,05 - 0,8 mm, vorzugsweise im Bereich von 0,2 bis 0,6 mm) aus.
- Der Schaumkern weißt eine nahezu 100% geschlossenzellige Struktur auf.
- Es liegt eine sehr gute Anbindung/Anhaftung zu den Deckschichten vor. Unter "sehr guter Anbindung/Anhaftung" wird im folgenden verstanden, daß die Kraft, die zur Ablösung der Deckschicht erforderlich ist (Meßmethode, Norm: Trommel-Schälversuch nach DIN 53295), größer ist als materialtypische Schälmomente. Diese liegen für ROHACELL im Bereich von 10 bis 80 Nmm/mm.
- Über das Verfahren wird eine sehr gute Formgebung realisiert. Dreidimensionale Geometrien mit sehr geringen Radien können abgeformt werden. Der Stahlstab wird gut abgeformt.
- Es liegt eine sehr gute Abformung der dreidimensionalen Geometrie vor. Das bedeutet, dass hohe Umformgrade des Schaumkerns und der Deckschichten durch den Prozess erreicht werden.
- Der Verbundformkörper weißt eine glatte Außenhaut auf.
- Beim Kunstoffverbundschaumkörper liegt eine sehr gute Faserkonsolidierung vor. Zur Initiierung des Schäumprozesses werden hohe Temperaturen (Bereich siehe oben) in das Bauteil eingebracht. Dies führt zum Beispiel bei thermoplastischen Matrixsystemen der Deckschichten (beispielsweise Organoblech) zu einer Aufschmelzen der Materialien. Des Weiteren werden über den Schäumprozess hohe Drücke auf die Deckschichten aufgebracht. Dies führt zu einer guten Konsolidierung der enthaltenen Fasern.
- Durch den Verbund wird eine hohe Energieaufnahme ermöglicht. Die hohe Energieaufnahme resultiert sowohl aus den faserverstärkten Deckschichten als auch aus dem Schaumkern: Im Falle einer starken Energieeinwirkung (beispielsweise Crash) werden sich nach dem Erreichen der Festigkeit in der Deckschicht Risse bilden. Diese "wandern" von Faser zu Faser und "verbrauchen" dabei Energie. Beim Schaum liegt folgender Fall vor: Bei Überschreitung der Festigkeit kommt es zum sog. Kollaps der ersten Zellen. Anschließend kollabiert eine komplette Zellebene, dann die nächste, dann die nächste, usw. Hierbei wird durch das wiederholte "Auftreffen auf ein Hindernis (unzerstörte Zellebene)" Energie abgebaut.
- Der Kunstoffverbundformkörper hat hohe Biege- und Torsionssteifigkeiten, hohe Knicklasten und ein sehr gutes Beulverhalten. Den guten mechanischen Eigenschaften liegt im Wesentlichen das Prinzip der Sandwichsbauweise zu Grunde. Die Sandwichbauweise ist eine Bauweise für Halbzeuge bei der mehrere Schichten verschiedener Eigenschaften in einem Werkstoff eingebettet werden. Sie wird sehr häufig in Kombination mit Faserverbundwerkstoffen wie Faser-Kunststoff-Verbunden angewendet. Als Konstruktionsweise bezeichnet die Sandwichbauweise eine Form des Leichtbaus, bei dem die Bauteile aus kraftaufnehmenden Decklagen bestehen, die durch einen relativ leichten Kernwerkstoff auf Abstand gehalten werden. Diese Teile sind bei geringem Gewicht sehr biege- und beulsteif. Ihre Berechnung wird nach der linearen Sandwichtheorie vorgenommen. Das Kernmaterial kann aus Papierwaben, Schaumstoffen (Hartschaum) oder Balsaholz bestehen. Da beispielsweise im Lastfall "Biegung" v.a. die äußeren Lagen die Zug- und Druckkräfte aufnehmen, kann der Plattenkern aus leichterem Material eingesetzt werden und ist lediglich zur Übertragung der Schubkräfte verantwortlich.

## Patentansprüche

1. Verfahren zur Herstellung eines Kunststoffschaumverbundformkörpers,
**dadurch gekennzeichnet, daß**
in eine Form eine oder mehrere Deckschichten aus einem thermoplastischen Material, einem thermoplastischen Faserverbundwerkstoff oder einem Organoblech und ein festes, ungeschäumtes Poly(meth)acrylimidcopolymer eingebracht werden und anschließend das Poly(meth)acrylimidcopolymer geschäumt wird und sich mit der oder den Deckschichten verbindet.

2. Verfahren nach Anspruch 1,
**dadurch gekennzeichnet, daß** das Schäumen bei 170 Grad Celsius bis 250 Grad Celsius durchgeführt wird.

3. Kunststoffschaumverbundformkörper, herstellbar gemäß Anspruch 1 oder 2, bestehend aus einem Poly(meth)acrylimidschaumkern und Deckschichten aus einem thermoplastischen Material und/oder einem thermoplastischen Faserverbundwerkstoff.

4. Verwendung des Kunststoffschaumverbundformkörpers nach Anspruch 3 als Bauteil in Raum-, Luft-, See- und Landfahrzeugen.

5. Verwendung des Kunststoffschaumverbundformkörpers nach Anspruch 4 als energieabsorbierendes Bauteil in Raum-, Luft-, See- und Landfahrzeugen.

6. Verwendung des Kunststoffschaumverbundformkörpers nach Anspruch 4 als stabilisierendes Bauteil in Raum-, Luft-, See- und Landfahrzeugen.

## Claims

1. Process for producing a plastics foam composite moulding,
**characterized in that**
one or more outer layers made of a thermoplastic material, of a thermoplastic fibre composite material or of an organopanel are introduced together with a solid, unfoamed poly(meth)acrylimide copolymer into a mould and then the poly(meth)acrylimide copolymer is foamed and bonds to the outer layer(s).

2. Process according to Claim 1,
**characterized in that** the foaming is carried out at from 170 degrees Celsius to 250 degrees Celsius.

3. Plastics foam composite moulding producible according to Claim 1 or 2, composed of a poly(meth)acrylimide foam core and outer layers made of a thermoplastic material and/or of a thermoplastic fibre composite material.

4. Use of the plastics foam composite moulding according to Claim 3 as component in spacecraft, aircraft, watercraft and land vehicles.

5. Use of the plastics foam composite moulding according to Claim 4 as energy-absorbing component in spacecraft, aircraft, watercraft and land vehicles.

6. Use of the plastics foam composite moulding according to Claim 4 as stabilizing component in spacecraft, aircraft, watercraft and land vehicles.

## Revendications

1. Procédé de fabrication d'un corps moulé composite en mousse plastique, **caractérisé en ce que**
une ou plusieurs couches de recouvrement en un matériau thermoplastique, un matériau composite fibreux thermoplastique ou une tôle organique et un copolymère de poly(méth)acrylimide solide non moussé sont introduits dans un moule, puis le copolymère de poly(méth)acrylimide est moussé et se lie à la ou les couches de recouvrement.

2. Procédé selon la revendication 1, **caractérisé en ce que** le moussage est réalisé à une température de 170 °C à 250 °C.

3. Corps moulé composite en mousse plastique, pouvant être fabriqué selon la revendication 1 ou 2, constitué par un noyau en mousse de poly(méth)acrylimide et des couches de recouvrement en un matériau thermoplastique et/ou un matériau composite fibreux thermoplastique.

4. Utilisation du corps moulé composite en mousse plastique selon la revendication 3 en tant que composant dans des véhicules spatiaux, aériens, marins et terrestres.

5. Utilisation du corps moulé composite en mousse plastique selon la revendication 4 en tant que composant absorbant l'énergie dans des véhicules spatiaux, aériens, marins et terrestres.

6. Utilisation du corps moulé composite en mousse plastique selon la revendication 4 en tant que composant stabilisateur dans des véhicules spatiaux, aériens, marins et terrestres.
